(19) Europäisches Patentamt
European Patent Office
Office européen des brevets

(11) **EP 3 901 457 A1**

(12) **EUROPEAN PATENT APPLICATION**

(43) Date of publication:
**27.10.2021 Bulletin 2021/43**

(51) Int Cl.:
*F03D 17/00* (2016.01)  *F03D 7/04* (2006.01)

(21) Application number: **21163166.8**

(22) Date of filing: **17.03.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.04.2020 JP 2020075633**

(71) Applicant: **Nabtesco Corporation
Tokyo 102-0093 (JP)**

(72) Inventors:
• **KODAMA, Haruo**
  **Tokyo, 102-0093 (JP)**
• **OSAKO, Haruna**
  **Tokyo, 102-0093 (JP)**
• **GOTO, Kenta**
  **Tokyo, 102-0093 (JP)**

(74) Representative: **Grünecker Patent- und
Rechtsanwälte
PartG mbB
Leopoldstraße 4
80802 München (DE)**

(54) **STATUS MONITORING DEVICE AND STATUS MONITORING METHOD**

(57) A status monitoring device (1a) includes: a sensor unit (2) sensing two or more physical quantities related to operation of an actuator (3); and a determination unit (401) obtaining a model that uses the physical quantities as input and outputs an evaluation value representing a status of the actuator (3), the determination unit (401) determining whether the evaluation value outputted by the model using the physical quantities during a predetermined period of time as the input satisfies a predetermined condition. The determination unit (401) determines whether the evaluation value satisfies the predetermined condition based on whether the evaluation value is less than a threshold value.

Fig. 3

EP 3 901 457 A1

## Description

### TECHNICAL FIELD

The present invention relates to a status monitoring device and a status monitoring method.

### BACKGROUND

A nacelle provided in a wind turbine is driven by one or more yaw actuators. The nacelle is thus rotated in the yaw direction (YAW) relative to a tower of the wind turbine.

It is demanded to avoid fail of the yaw actuators (see, for example, Japanese Patent Application Publication No. 2015-140777).

In order to avoid failure of the yaw actuator, it is necessary to determine whether the status of the yaw actuator is abnormal. However, it may not be always possible to determine whether the status of the yaw actuator is abnormal.

In view of the above, the present invention provides a status monitoring device and a status monitoring method capable of determining whether the status of the yaw actuator is abnormal.

### SUMMARY

According to a first aspect of the invention, provided is a status monitoring device that includes: a sensor unit sensing two or more physical quantities related to operation of an actuator; and a determination unit obtaining a model that uses the physical quantities as input and outputs an evaluation value representing a status of the actuator, and determining whether the evaluation value outputted by the model using the physical quantities during a predetermined period of time as the input satisfies a predetermined condition.

The above status monitoring device takes the physical quantities related to the yaw actuator as of a predetermined period of time as input and determines whether the evaluation value outputted by the generated model satisfies a predetermined condition. In this manner, it is possible to determine whether the status of the yaw actuator is abnormal.

According to a second aspect of the invention, in the status monitoring device of the first aspect, the physical quantities are a current amount and a strain amount.

According to a third aspect of the invention, in the status monitoring device of the first and second aspects, the model is represented using a mathematical formula, a conversion table, or a neural network.

According to a fourth aspect of the invention, the status monitoring device of the first to third aspects further includes a control unit controlling the operation of the actuator such that an electromagnetic brake of the actuator is weaken when the determination unit determined that the predetermined condition is unsatisfied.

According to a fifth aspect of the invention, the status monitoring device of the first to fourth aspects further includes a generation unit generating the model based on the physical quantities sensed by the sensor unit.

According to a sixth aspect of the invention, the status monitoring device of the first to fifth aspects further includes the sensor unit detects torque of a shaft of the actuator provided in a wind turbine and a drive current amount or a brake current amount.

A seventh aspect of the invention provides a status monitoring method performed by a status monitoring device. The method includes: sensing two or more physical quantities related to operation of an actuator; and obtaining a model that uses the physical quantities as input and outputs an evaluation value representing a status of the actuator, and determining whether the evaluation value outputted by the model using the physical quantities during a predetermined period of time as the input satisfies a predetermined condition.

### ADVANTAGEOUS EFFECTS

According to one or more aspects of the invention described above, it possible to determine whether the status of the yaw actuator is abnormal.

### BRIEF DESCRIPTION OF THE DRAWINGS

Fig. 1 is a perspective view showing a configuration example of a wind turbine according to a first embodiment of the invention.
Fig. 2 illustrates a configuration example of a group of sensors and a yaw actuator according to the first embodiment.
Fig. 3 illustrates a configuration example of a status monitoring system according to the first embodiment.

Fig. 4 illustrates an example of a model using a neural network in the first embodiment.
Fig. 5 illustrates an example of a model using a conversion table in the first embodiment.
Fig. 6 is a flowchart showing an operation example of the status monitoring system according to the first embodiment.
Fig. 7 illustrates a configuration example of the status monitoring system according to a second embodiment.

## DESCRIPTION OF THE EMBODIMENTS

Embodiments of the present invention will now be described with reference to the appended drawings.

<First Embodiment

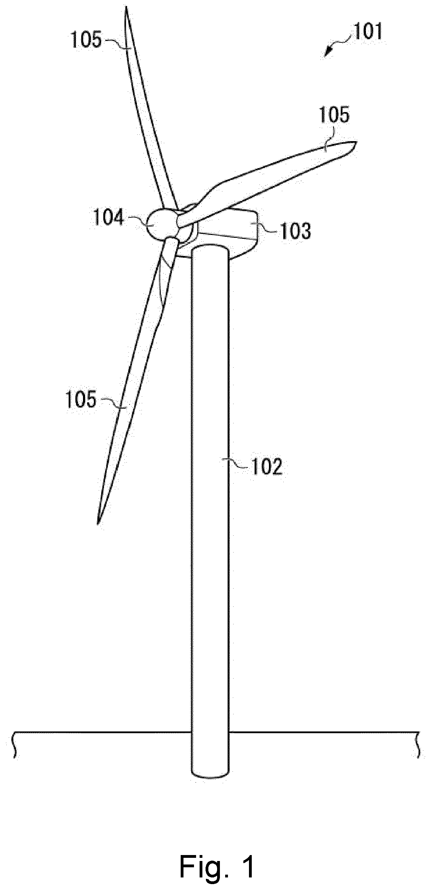

Fig. 1 is a perspective view showing an example of configuration of a wind turbine 101. The wind turbine 101 includes a tower 102, a nacelle 103, a rotor (main shaft portion) 104, and a plurality of blades 105. The tower is situated vertically upward from the land or the sea.
The nacelle 103 is situated on a top portion of the tower 102 so as to be rotatable. The nacelle 103 is driven by yaw actuators installed in the nacelle 103. The nacelle 103, driven by the yaw actuators, rotates about the longitudinal direction of the tower 102. In other words, the nacelle 103 rotates in the yaw direction (YAW) relative to the tower 102.
The rotor 104 rotates in the roll direction (ROLL) on the nacelle 103. The plurality (e.g., three) of blades 105 are provided on the rotor 104 at an equal angle relative to each other, so as to extend radially from the rotation axis of the roll direction.

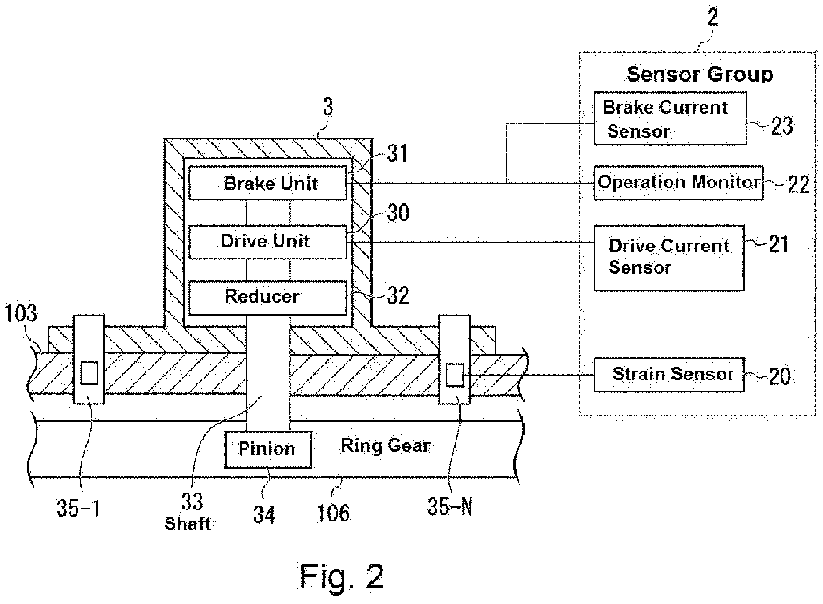

Fig. 2 illustrates a configuration example of a group of sensors 2 and a yaw actuator 3. A ring gear 106 is provided on top of the tower 102. The ring gear 106 is either a member having multiple internal teeth on its inner periphery or a member having multiple external teeth on its outer periphery. The nacelle 103 is provided with M number of the yaw actuators 3 (M is an integer greater than or equal to 1). The yaw actuator 3 is provided with the group of sensors 2. The sensor group 2 includes a strain sensor 20, a drive current sensor 21, an operation monitor 22, and a brake current sensor 23.
The yaw actuators 3 cause the nacelle 103 to rotate or stop in the yaw direction relative to the tower 102. The yaw actuator 3 is fixed to the nacelle 103 of the wind turbine with N number of bolts 35 (N is an integer greater than or equal to 2). The N bolts 35 are arranged circumferentially on the yaw actuator 3.
The yaw actuators 3 each include a drive unit 30, a brake unit 31, a speed reducer 32, a shaft 33, and a pinion 34. The speed reducer 32 includes gears serving as a speed reducing mechanism. The pinion 34 is positioned at the end of the shaft 33 so as to mesh with the ring gear 106. The bolts 35-1 to 35-N are members for fixing the yaw actuator 3 to the nacelle 103. The bolts 35 undergo strain in accordance with the moment caused by external loads such as wind.
The drive unit 30 is a motor. The drive unit 30 rotates the shaft 33 about the longitudinal direction of the shaft 33 in accordance with the electric current supplied to the drive unit 30. The brake unit 31 reduces the rotational speed of the shaft 33 by an electromagnetic brake. The brake unit 31 may maintain the stopped state of the rotation of the shaft 33 by the electromagnetic brake. The speed reducer 32 sets the rotational speed of the shaft 33 by the gears included in the speed reducer 32.
The shaft 33 is driven by the drive unit 30 to rotate at a rotational speed that is determined by the speed reducer 32. The shaft 33 is driven by the drive unit 30 to rotate with a predetermined torque (shaft torque). The pinion 34 rotates in mesh with the internal teeth of the ring gear 106 in accordance with the amount of rotation of the shaft 33. The nacelle 103 is thus rotated in the yaw direction relative to the tower 102.
The strain sensor 20 is a device that measures the amount of strain in the corresponding bolt 35. The amount of strain herein refers to the amount of deformation. A strain sensor 20-n (n is an integer from 1 to N) is provided for a bolt 35-n. The bolts 35 is strained in accordance with the moment caused by rotation of the shaft 33. The strain sensor 20-n senses the amount of strain in the corresponding bolt 35-n.
The drive current sensor 21 detects the amount of current (the amount of drive current) supplied to the drive unit 30. The amount of current is the amount of electricity running in a unit time. The operation monitor 22 detects whether electromagnetic brake is active or not (operation status) in the brake unit 31. The brake current sensor 23 detects the amount of current of the electromagnetic brake (braking) in the brake unit 31.

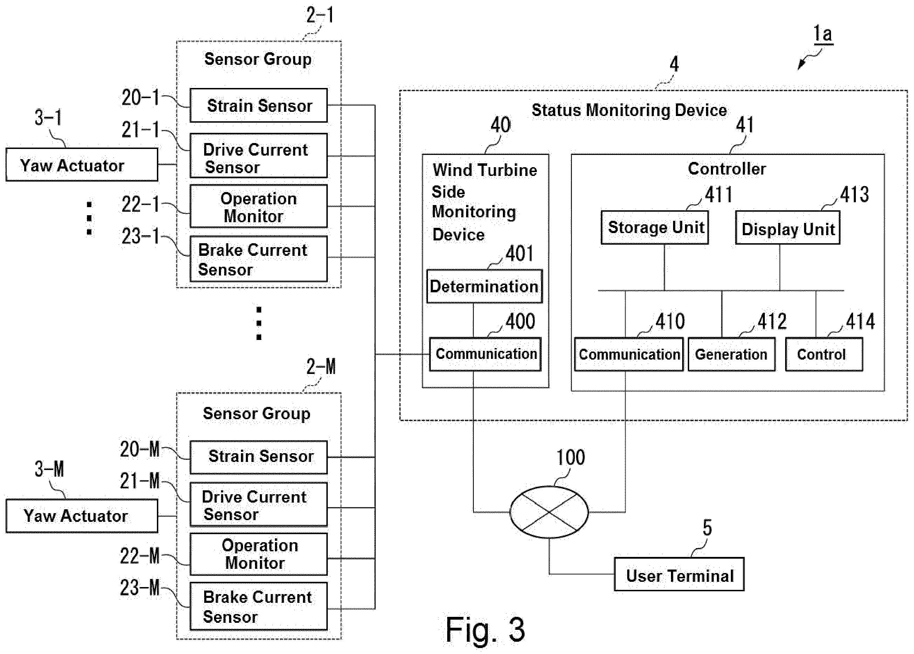

Fig. 3 illustrates a configuration example of a status monitoring system 1a. The status monitoring system 1a is a system for monitoring the status of the yaw actuator 3. The status monitoring system 1a monitors, for example, whether there is an abnormality in the yaw actuator 3 as the status of the yaw actuator 3. The status monitoring system 1a may predict the occurrence of an abnormality in the yaw actuator 3. The status monitoring system 1a creates a model for detecting an abnormality in the yaw actuator 3 or a model for predicting the occurrence of an abnormality in the yaw actuator 3 by using, for example, a mathematical formula (function) or a neural network.
The status monitoring system 1a determines whether there is an abnormality in the yaw actuator 3 by using a physical quantity related to the yaw actuator 3 and a model for detecting the abnormality. The status monitoring system 1a may predict whether an abnormality occurs in the yaw actuator 3 by using a physical quantity related to the yaw actuator 3 and a model for predicting the occurrence of the abnormality.

The physical quantity related to the yaw actuator 3 is, for example, a torque of the shaft 33 of the yaw actuator 3, the air gap amount of the brake unit 31, or the amount of current used for braking (hereinafter referred to as "brake current amount"). The torque of the shaft 33 of the yaw actuator 3 can be derived based on, for example, the amount of current used to drive the drive unit 30 (hereinafter referred to as "drive current amount"). When no current is supplied to the drive unit 30, the torque of the shaft 33 of the yaw actuator 3 can be derived, for example, based on the amount of strain of the bolt 35 according to the moment.

In this manner, the status monitoring system 1a is able to determine whether the status of the yaw actuator is abnormal. Further, the status monitoring system 1a is able to avoid an overload of the yaw actuator 3.

The status monitoring system 1a includes the sensor group 2, the yaw actuators 3-1 to 3-M, the status monitoring device 4, and a user terminal 5. The status monitoring device 4 includes a wind turbine side monitoring device 40 and a controller 41.

The wind turbine side monitoring device 40 is a device that monitors the status of the yaw actuator 3. The wind turbine side monitoring device 40 is a programmable logic controller (PLC). The wind turbine side monitoring device 40 is provided in, for example, the nacelle 103 of the wind turbine 101. The wind turbine side monitoring device 40 includes a communication unit 400 and a determination unit 401.

The controller 41 is a device that controls the operation of the yaw actuator 3. The controller 41 is, for example, a server, a workstation, a personal computer, a tablet device, or a smartphone device. The controller 41 is installed, for example, in a company building where an administrator of the wind turbine 101 stays. The controller 41 includes a communication unit 410, a storage unit 411, a generation unit 412, a display unit 413, and a control unit 414.

The communication unit 410, the generation unit 412, and the control unit 414 are interconnected with each other through a bus. A part or all of the communication unit 410, the generation unit 412, and the control unit 414 are implemented by a processor such as a CPU (central processing unit) executing a program(s) stored on the storage unit 411. The storage unit 411 is preferably formed of a non-volatile storage medium (non-transitory storage medium) such as a flash memory or a HDD. The storage unit 411 may include a volatile storage medium such as a RAM (random access memory). A part or all of the communication unit 410, the generation unit 412, and the control unit 414 may be implemented by using a microcomputer such as an LSI (large scale integration) or an ASIC (application specific integrated circuit).

The user terminal 5 is, for example, a workstation, a personal computer, a tablet device, or a smartphone device. The user terminal 5 is installed, for example, in a company building where a user of the wind turbine 101 stays. The user terminal 5 is communicably connected to the wind turbine side monitoring device 40 and the status monitoring device 4 via a communication line 100.

A description is now given of the wind turbine side monitoring device 40. The communication unit 400 communicates with the communication unit 410 via the communication line 100 such as a WAN (Wide Area Network) or the Internet. The communication unit 400 communicates with the user terminal 5 via the communication line 100.

The communication unit 400 obtains, for each of the yaw actuators 3-1 to 3-M, a signal representing the physical quantity related to the yaw actuator 3-m (m is an integer from 1 to M) from a corresponding sensor group 2-m. The communication unit 400 obtains a signal representing the amount of strain of each bolt 35 from the corresponding strain sensor 20. The communication unit 400 obtains, from the drive current sensor 21, a signal representing the amount of current of the drive unit 30. The communication unit 400 obtains, a signal indicating whether the electromagnetic brake is active in the brake unit 31. The communication unit 400 may obtain, from the operation monitor 22, a signal representing the amount of air gap of the brake unit 31. The communication unit 400 obtains, from the brake current sensor 23, the amount of current of the electromagnetic brake in the brake unit 31.

The determination unit 401 obtains, from the communication unit 400, a signal representing a physical quantity related to the yaw actuators 3-1 to 3-M. The determination unit 401 obtains a model from the generation unit 412 via the communication unit 410 and the communication unit 400. The model is, for example, a model for detecting an abnormality in the yaw actuator 3 or a model for predicting occurrence of an abnormality in the yaw actuator 3.

The determination unit 401 performs a determination process for each yaw actuator 3 using the sensed physical quantity and the model. The determination unit 401 may perform the determination process for a set of two or more yaw actuators 3. The determination unit 401 determines whether an evaluation value outputted from the model satisfies a predetermined condition. The determination unit 401 transmits a result of the determination to the control unit 414. The determination result may be displayed on the display unit 413.

The determination unit 401 determines for each yaw actuator 3 whether the evaluation value is equal to or greater than a threshold value. In this manner, the determination unit 401 is able to determine that an abnormality has occurred in the yaw actuator 3 when at least one of the yaw actuators 3 installed in the nacelle 103 is overloaded (the evaluation value is equal to or higher than the threshold value).

The determination unit 401 determines whether a proportion of the number of the yaw actuators 3 whose evaluation values are equal to or greater than the threshold value to the total number of the yaw actuators 3 installed in the nacelle 103 is a predetermined value or more (for example, half or more). For example, the determination unit 401 may determine whether the proportion of the number of the yaw actuators 3 whose evaluation values are equal to or greater than the threshold value is more than half of the total. In this way, when more than half of the yaw actuators 3 installed in the nacelle 103 are overloaded, for example, the determination unit 401 may determine that an abnormality has occurred in more than half of the yaw actuators 3.

[Case where model is represented using mathematical formula]

The determination unit 401 obtains a model represented using a mathematical formula from the generation unit 412. The formula representing the model is not limited to particular formulas. The model is represented by a weighted average, for example, Formula (1).

$$E = (a \times x_1 + b \times x_2 + c \times x_3 + d \times x_4) / (x_1 + x_2 + x_3 + x_4) \ldots (1)$$

Here, "E" represents the evaluation value. The evaluation value is compared to the predetermined threshold. "$X_1$", "$X_2$", "$X_3$", and "$X_4$" represent respective sensed physical quantities. For example, the physical quantity "$X_1$" represents a strain amount. The physical quantity "$X_2$" represents a current (drive current current) supplied to the drive unit 30. The physical quantity "$X_3$" represents an operation status (ON: 1, OFF: 0) or a signal voltage value (ON: 1V, OFF: 0V) of the brake unit 31. The physical quantity "$X_4$" represents a current (brake current) supplied to the brake unit 31. "a" is a weighting factor of the physical quantity "$X_1$". "b" is a weighting factor of the physical quantity "$X_2$". "c" is a weighting factor of the physical quantity "$X_3$". "d" is a weighting factor of the physical quantity "$X_4$".

The determination unit 401 compares the predetermined threshold value to the evaluation value "E" for each yaw actuator 3. When the evaluation value is equal to or greater than the threshold value, the determination unit 401 determines that the yaw actuator 3 operates abnormally. When the evaluation value is less than the threshold value, the determination unit 401 determines that the yaw actuator 3 operates normally. When the evaluation value is equal to or greater than the threshold value, the determination unit 401 determines that there is a high probability of an abnormality occurring. When the evaluation value is less than the threshold value, the determination unit 401 determines that there is a less probability of an abnormality occurring.

[Case where model (machine learning model) is represented using neural network]

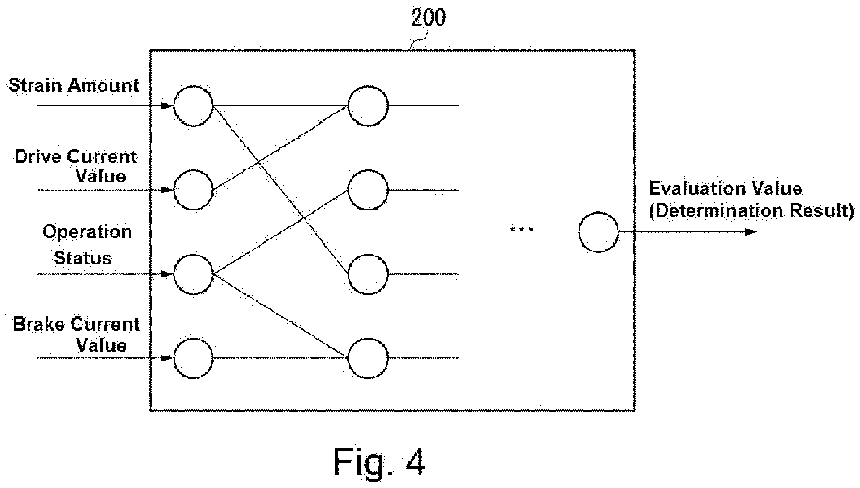

Fig. 4 illustrates an example of a model 200 using a neural network. The determination unit 401 obtains a trained model 200 from the generation unit 412. In an estimation stage among a training stage and the estimation stage (determination stage) of the model 200, the determination unit 401 inputs the physical quantity(s) sensed by the sensor group 2 to the model 200 that has been trained in the training stage. For example, the determination unit 401 inputs, to the model 200, a strain amount value, a drive current amount value (hereinafter referred to as "drive current value"), the operation status, and a brake current amount value (hereinafter referred to as "brake current value"). The determination unit 401 derives a determination result (the evaluation value) as an output of the trained model 200.

[Case where model is represented using conversion table]

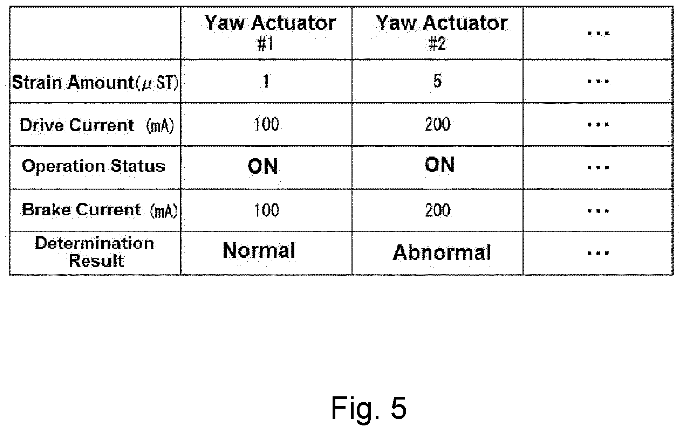

Fig. 5 illustrates an example of a model using a conversion table. The determination unit 401 obtains a model represented using a conversion table from the generation unit 412. In the conversion table (model), a pattern of the physical quantities sensed by the sensor group 2 is associated with a determination result for each yaw actuator 3. Each value shown in the conversion table is merely an example. The determination unit 401 searches the conversion table for a pattern of the physical quantities newly sensed by the sensor group 2. In this manner, it is possible to determine whether there is an abnormality in the yaw actuator 3.

For example, a physical quantity pattern where the strain amount is "1 μST", the drive current value is "100 mA", the operation status (of the electromagnetic brake) is "ON", and the brake current value is "100 mA" is detected for the yaw actuator 3-1, the determination unit 401 determines that the yaw actuator 3-1 is normal based on the conversion table. For example, a physical quantity pattern where the strain amount is "5 μST", the drive current value is "200 mA", the operation status (of the electromagnetic brake) is "ON", and the brake current value is "200 mA" is detected for the yaw actuator 3-2, the determination unit 401 determines that the yaw actuator 3-2 is abnormal based on the conversion table.

The determination unit 401 may obtain, from the generation unit 412, a plurality of conversion tables that include a plurality of patterns of the sensed physical quantities as a plurality of models. Further, the determination unit 401 may determine that it is abnormal when a pattern of the physical quantities sensed by the sensor group 2 is not included in any of the plurality of conversion tables.

The controller 41 will be now described in detail. The controller 41 controls the operation of the yaw actuator 3 based on the result of determination whether there is an abnormality in the yaw actuator 3. The controller 41 may control the operation of the yaw actuator 3 based on a result of prediction about the occurrence of an abnormality in the yaw actuator 3.

The communication unit 410 performs wired communication or wireless communication. The communication unit 410 communicates with the user terminal 5, the controller 41, and the wind turbine side monitoring device 40 through the communication line 100. The communication unit 410 obtains the result of determination by the determination unit 401 from the communication unit 400. The communication unit 410 may obtain an instruction signal for the status monitoring device 4 from an external device (not shown). For example, the communication unit 410 may obtain an instruction signal indicating whether to end the determination process from an external device (not shown).

The storage unit 411 stores, for each yaw actuator 3, the physical quantity data (sensor data) sensed by the sensor group 2. The storage unit 411 may store a model represented using a mathematical formula, a neural network, a data table (conversion table), or the like. The storage unit 411 may store programs and parameters.

The generation unit 412 determines whether the model has been generated. If the model has not been generated, the generation unit 412 generates the model. The input of the model is the physical quantities sensed by the sensor group 2. The output (determination result) of the model is the evaluation value representing the status of the yaw actuator 3. An initial value for the model may be predetermined or may be randomly selected from a plurality of candidate values. The generation unit 412 continuously updates the generated model with newly sensed physical quantities.

The display unit 413 is, for example, a display device such as a liquid crystal display or an organic electroluminescence display. The display unit 413 may include an operation device such as a touch panel. The display unit 413 displays an image representing the result of the determination performed by the determination unit 401. The display unit 413 may display, for example, an image related to the control process performed by the control unit 414.

The control unit 414 controls the operation of the yaw actuator 3 so as to satisfy a predetermined condition based on a result of determination whether the predetermined condition is satisfied. The predetermined condition is, for example, a condition that the evaluation value is less than a threshold value. For example, the control unit 414 may weaken the electromagnetic brake of the brake unit 31 in the yaw actuator 3 that is determined to be abnormal (does not satisfy the predetermined condition) based on the evaluation value being equal to or higher than the threshold value. For example, the control unit 414 may weaken the electromagnetic brake of the brake unit 31 in the yaw actuator 3 that is predicted to operate abnormally based on the evaluation value being equal to or higher than the threshold value.

In this way, the control unit 414 can reduce the load on the yaw actuator 3 when its shaft 33 has a torque value equal to or larger than a predetermined value. The control unit 414 can uniform the load on each yaw actuator 3 by adjusting the driving timing of the drive unit 30 and intermittently releasing the electromagnetic brake in the brake unit 31.

The generation unit 412 will be now described in detail.

[Case where model is represented using mathematical formula]

The generation unit 412 generates a model represented using a mathematical formula. The formula representing the model is not limited to particular formulas. The model is represented by a weighted average, for example, Formula (1). In Formula (1), an initial value of the weighting factor may be predetermined or may be randomly selected from a plurality of candidate values. The generation unit 412 provides the mathematical formula as a model to the determination unit 401.

[Case where model (machine learning model) is represented using neural network]

In the training stage among the training stage and the estimation stage (determination stage) of the model, the generation unit 412 generates a model represented using a neural network. The neural network may be a convolutional neural network. The training of the neural network is performed using teacher data including the accumulated physical quantity data. The generation unit 412 may update parameters of the model by deep learning. The generation unit 412 may update the parameters of the model by using a backpropagation method. The generation unit 412 provides the neural network as a model to the determination unit 401.

[Case where model is represented using conversion table]

The generation unit 412 generates a conversion table by associating each physical quantity detected at a predetermined past time with a result of determination (whether it is abnormal) by the determination unit 401 at the same time. The generation unit 412 generates, for example, the conversion table shown in Fig. 5. The generation unit 412 provides the conversion table as a model to the determination unit 401.

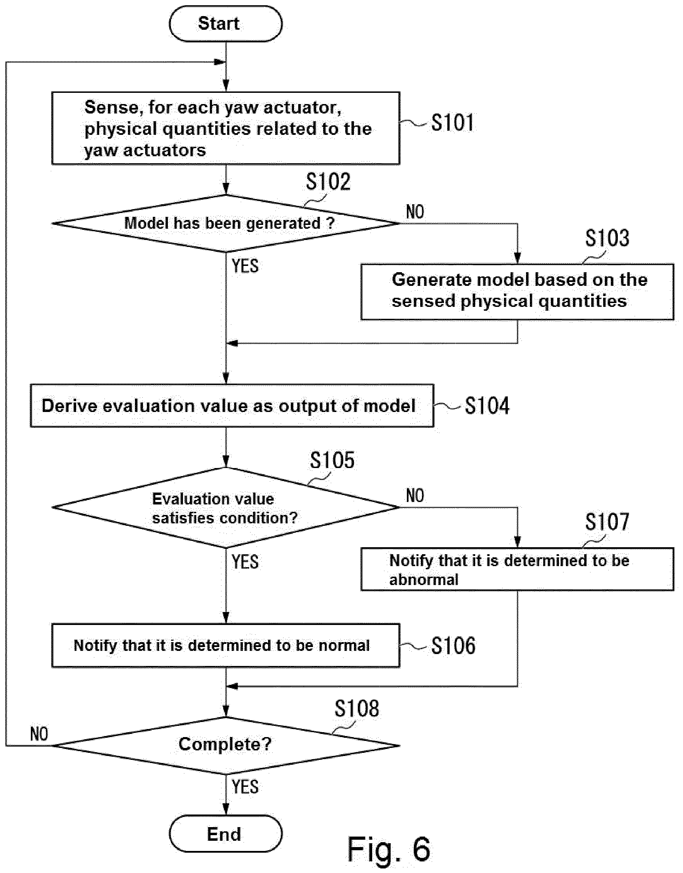

A description is now given of an operation example of the status monitoring system 1a. Fig. 6 is a flowchart showing the operation example of the status monitoring system 1a. The sensor group 2 senses, for each yaw actuator 3, the physical quantities related to the yaw actuators 3 (step S101). The determination unit 401 or the generation unit 412 determines whether the model has been generated (trained) (step S102). When the model has not been generated (step S102: NO), the generation unit 412 generates a model based on the sensed physical quantities (step S103). When the model has been generated (step S102: YES), the determination unit 401 inputs the sensed physical quantities to the model. The determination unit 401 derives the evaluation value as the output of the model (step S104).

The determination unit 401 determines whether the evaluation value satisfies the condition, for example, by comparing the evaluation value with the threshold value (step S105). When the evaluation value satisfies the condition (step S105: YES), the determination unit 401 notifies the user terminal 5 or the like that it is determined to be normal. The determination unit 401 displays on the display unit 413 that it has been determined to be normal (step S106). When the evaluation value does not satisfy the condition (step S105: NO), the determination unit 401 notifies the user terminal 5 or the like that it is determined to be abnormal. The determination unit 401 displays on the display unit 413 that it has been determined to be abnormal (step S107).

The determination unit 401 determines whether to end the process shown in Fig. 6 (step S108). When the determination unit 401 determined to continue the process (step S108: NO), each functional unit of the status monitoring system 1a returns to the process of step S101. When the determination unit 401 determined to end the process (step S108: YES), each functional unit of the status monitoring system 1a ends the process shown in Fig. 6.

As described above, the sensor group 2 (sensor unit) senses a plurality of physical quantities related to the operation of the yaw actuator 3. The physical quantities related to the yaw actuator 3 is, for example, the strain amount of the bolt 35, the amount of current (drive current amount) of the drive unit 30, the amount of the air gap or the amount of brake current of the brake unit 31. The generation unit 412 generates a model. The determination unit 401 inputs, to the model, physical quantities sensed for a predetermined period. The determination unit 401 determines whether the evaluation value outputted from the model satisfies a predetermined condition.

In this way, the determination unit 401 inputs, into the model, the sensed physical quantities related to the yaw actuator 3. The determination unit 401 determines whether the evaluation value outputted from the model satisfies a predetermined condition. In this manner, it is possible to determine whether the status of the yaw actuator is abnormal. Further, it is possible to avoid an overload of the yaw actuator. Moreover, it is possible to avoid an overload of the yaw actuator.

As described above, the input of the model is the physical quantities detected in a predetermined period and the output of the model is the evaluation value indicating the status of the yaw actuator. The model is represented using, for example, a mathematical formula (data including a weighting factor and the like). The model may be represented using a conversion table. The model may be represented using a neural network.

Modification Example

The determination unit 401 may estimate a torque of the shaft 33 of each yaw actuator 3. The determination unit 401 derives a value of the torque of the shaft 33 based on the sensed current amount or strain amount and a conversion table. The conversion table is a data table for converting the amount of current or the amount of strain into the torque value. That is, the conversion table is a data table whose input is the current amount or strain amount and whose output is the torque (evaluation value). The conversion table may be generated in advance by the generation unit 412 as a model, for example, by measuring correlation between the torque and the amount of current or the amount of strain in advance. The data of the correlation between the torque and the amount of current or the amount of strain is stored in, for example, the storage unit 411.

When the shaft 33 is stopped, no drive current is supplied to the drive unit 30, and thus the drive current sensor 21 cannot measure the amount of current of the drive unit 30. Therefore, when the shaft 33 is stopped, the determination unit 401 estimates the torque of the shaft 33 based on the measured amount of strain and the conversion table.

When the shaft 33 is driven, the drive current is supplied to the drive unit 30, and thus the drive current sensor 21 is able to measure the amount of current of the drive unit 30. Therefore, when the shaft 33 is being driven, the determination unit 401 derives the torque of the shaft 33 based on the measured current value and the conversion table. In addition, when the shaft 33 is being driven, each of the strain sensors 20 can measure the amount of strain in the corresponding bolt 35. Therefore, when the shaft 33 is being driven, the determination unit 401 may derive the torque of the shaft 33 based on the measured strain amount and the conversion table.

The determination unit 401 compares the torque of the shaft 33 to the threshold value for each yaw actuator 3. The determination unit 401 determines whether the condition that the torque of the shaft 33 is equal to or greater than a threshold value is satisfied. When it is determined that the torque of the shaft 33 is equal to or greater than the threshold value, the determination unit 401 notifies the control unit 414 that it is determined to be abnormal. When it is determined that the torque of the shaft 33 is less than the threshold value, the determination unit 401 notifies the control unit 414 that it is determined to be normal. The determination result may be displayed on the display unit 413. The control unit 414 may weaken the electromagnetic brake of the brake unit 31 in the yaw actuator 3 when the shaft 33 of the yaw actuator 3 has a torque value equal to or larger than a predetermined value.

Second Embodiment

A second embodiment is different from the first embodiment in that at least some of the functional units of the status monitoring device 4 is distributed. The following description of the second embodiment will be focused on the difference from the first embodiment.

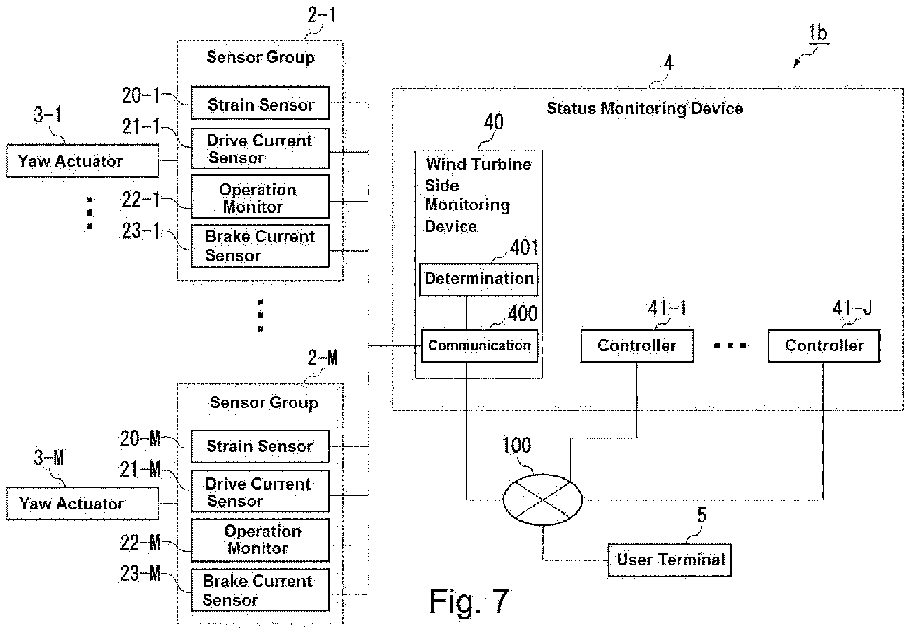

Fig. 7 illustrates a configuration example of a status monitoring system 1b. The status monitoring system 1b includes the sensor group 2, the yaw actuators 3-1 to 3-M, the status monitoring device 4, and the user terminal 5. The status monitoring device 4 includes the wind turbine side monitoring device 40 and a plurality of the controllers 41.

The plurality of controllers 41 are distributed via the communication line 100. Some functional units in the controller 41 may be distributed. The plurality of controllers 41 implement cloud computing by communicating with each other via the communication line 100. The plurality of controllers 41 generate a model for detecting an abnormality in the yaw actuator 3. The plurality of controllers 41 may generate a model for predicting the occurrence of an abnormality in the yaw actuator 3.

As described above, the plurality of controllers 41 generate, by cloud computing, a model for detecting an abnormality in the yaw actuator 3. Even when a high calculation performance is required for the generation unit 412 to create a model, it is possible to determine with high accuracy whether the status of the yaw actuator is abnormal.

The foregoing is the description of the embodiments of the present invention with reference to the drawings. Specific configurations are not limited to the above embodiments but include design modifications within the purport of the present invention.

**LIST OF REFERENCE NUMBERS**

| | |
|---|---|
| 1a, 1b | status monitoring system |
| 2 | sensor group |
| 3 | yaw actuator |
| 4 | status monitoring device |
| 5 | user terminal |
| 20 | strain sensor |
| 21 | drive current sensor |
| 22 | operation monitor |
| 23 | brake current sensor |
| 40 | wind turbine side monitoring device |
| 41 | controller |
| 100 | communication line |
| 200 | model |
| 400 | communication unit |
| 401 | determination unit |
| 410 | communication unit |
| 411 | storage unit |
| 412 | generation unit |
| 413 | display unit |
| 414 | control unit |

**Claims**

1.  A status monitoring device (1a), comprising:

sensor unit (2) sensing two or more physical quantities related to operation of an actuator (3); and
a determination unit (401) obtaining a model that uses the physical quantities as input and outputs an evaluation value representing a status of the actuator (3), the determination unit (401) determining whether the evaluation value outputted by the model using the physical quantities during a predetermined period of time as the input satisfies a predetermined condition.

2. The status monitoring device (1a) according to claim 1, wherein the physical quantities are a current amount and a strain amount.

3. The status monitoring device (1a) according to claim 1 or 2, wherein the model is represented using a mathematical formula, a conversion table, or a neural network.

4. The status monitoring device (1a) according to claim 1 or 2, further comprising a control unit (414) controlling the operation of the actuator (3) such that an electromagnetic brake of the actuator (3) is weaken when the determination unit (401) determined that the predetermined condition is unsatisfied.

5. The status monitoring device (1a) according to claim 1 or 2, further comprising a generation unit (412) generating the model based on the physical quantities sensed by the sensor unit (2).

6. The status monitoring device (1a) according to claim 1 or 2, wherein the sensor unit (2) detects torque of a shaft (33) of the actuator (3) provided in a wind turbine and a drive current amount or a brake current amount.

7. A status monitoring method performed by a status monitoring device (1a), comprising:

sensing two or more physical quantities related to operation of an actuator (3); and
obtaining a model that uses the physical quantities as input and outputs an evaluation value representing a status of the actuator (3), and determining whether the evaluation value outputted by the model using the physical quantities during a predetermined period of time as the input satisfies a predetermined condition.

Fig. 1

Fig. 2

Fig. 3

Fig. 4

| | Yaw Actuator #1 | Yaw Actuator #2 | ... |
|---|---|---|---|
| Strain Amount($\mu$ ST) | 1 | 5 | ... |
| Drive Current (mA) | 100 | 200 | ... |
| Operation Status | ON | ON | ... |
| Brake Current (mA) | 100 | 200 | ... |
| Determination Result | Normal | Abnormal | ... |

Fig. 5

Start

Sense, for each yaw actuator,
physical quantities related to the
yaw actuators — S101

S102
Model has been generated ? — NO

YES

S103
Generate model based on the
sensed physical quantities

Derive evaluation value as output of model — S104

S105
Evaluation value
satisfies condition? — NO

YES

S107
Notify that it is determined to be
abnormal

Notify that it is determined to be normal — S106

S108
NO — Complete?

YES

End

Fig. 6

Fig. 7

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 594 493 A1 (BONFIGLIOLI RIDUTTORI SPA [IT]) 15 January 2020 (2020-01-15) * paragraphs [0002], [0016], [0022], [0023], [0025] * * figure 2 * | 1,3-5,7 | INV. F03D17/00 ADD. F03D7/04 |
| X | EP 2 588 751 A1 (VESTAS WIND SYS AS [DK]) 8 May 2013 (2013-05-08) * paragraphs [0016], [0017], [0036] - [0039], [0041] * * figure 4 * | 1-3,5-7 | |
| X | EP 2 988 002 A1 (AREVA WIND GMBH [DE]) 24 February 2016 (2016-02-24) * paragraphs [0001], [0031], [0043] - [0046] * * figures 3,4 * | 1,3,5,7 | |
| X | EP 3 296 564 A1 (NABTESCO CORP [JP]) 21 March 2018 (2018-03-21) * paragraphs [0004], [0034], [0041] - [0043] * * figures 2,5,6 * | 1,3,5,7 | TECHNICAL FIELDS SEARCHED (IPC) F03D |

The present search report has been drawn up for all claims

| Place of search | Date of completion of the search | Examiner |
|---|---|---|
| The Hague | 23 August 2021 | Pasquet, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 16 3166

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2021

| Patent document cited in search report | | Publication date | Patent family member(s) | | Publication date |
|---|---|---|---|---|---|
| EP 3594493 | A1 | 15-01-2020 | NONE | | |
| EP 2588751 | A1 | 08-05-2013 | EP | 2588751 A1 | 08-05-2013 |
| | | | US | 2013115043 A1 | 09-05-2013 |
| | | | US | 2018135598 A1 | 17-05-2018 |
| | | | WO | 2012000504 A1 | 05-01-2012 |
| EP 2988002 | A1 | 24-02-2016 | BR | 112017003736 A2 | 05-12-2017 |
| | | | CA | 2957640 A1 | 25-02-2016 |
| | | | CN | 107002855 A | 01-08-2017 |
| | | | EP | 2988002 A1 | 24-02-2016 |
| | | | JP | 2017525891 A | 07-09-2017 |
| | | | KR | 20170042728 A | 19-04-2017 |
| | | | US | 2018291878 A1 | 11-10-2018 |
| | | | WO | 2016026961 A1 | 25-02-2016 |
| EP 3296564 | A1 | 21-03-2018 | DK | 3296564 T3 | 12-10-2020 |
| | | | EP | 3296564 A1 | 21-03-2018 |
| | | | JP | 6580367 B2 | 25-09-2019 |
| | | | JP | 2016211497 A | 15-12-2016 |
| | | | WO | 2016181729 A1 | 17-11-2016 |

EPO FORM P0459

For more details about this annex : see Official Journal of the European Patent Office, No. 12/82

**EP 3 901 457 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015140777 A